Europäisches Patentamt

European Patent Office

Office européen des brevets

(11) Publication number: **0 224 342 B1**

# EUROPEAN PATENT SPECIFICATION

(45) Date of publication of patent specification: **20.05.92**　(51) Int. Cl.⁵: **G11B 5/147**, G11B 5/187, G11B 5/127, G11B 5/21

(21) Application number: **86308488.5**

(22) Date of filing: **30.10.86**

(54) A magnetic head for recording and playback.

<table>
<tr><td>(30) Priority: <b>14.11.85 JP 255435/85</b></td><td>(73) Proprietor: <b>MITSUBISHI DENKI KABUSHIKI KAISHA<br>2-3, Marunouchi 2-chome Chiyoda-ku<br>Tokyo 100(JP)</b></td></tr>
<tr><td>(43) Date of publication of application:<br><b>03.06.87 Bulletin 87/23</b></td><td></td></tr>
<tr><td>(45) Publication of the grant of the patent:<br><b>20.05.92 Bulletin 92/21</b></td><td>(72) Inventor: <b>Niwa, Yoshikazu c/o Mitsubishi Denki K.K.<br>Kyoto Seisakusho 1 Babazusho<br>Nagaokakyo-shi Kyoto 617(JP)</b></td></tr>
<tr><td>(84) Designated Contracting States:<br><b>DE FR GB</b></td><td></td></tr>
<tr><td>(56) References cited:<br><b>EP-A- 0 115 842<br>EP-A- 0 235 395<br>DE-A- 2 642 012<br>GB-A- 2 147 448</b><br><br><b>PATENT ABSTRACTS OF JAPAN, vol. 5, no. 13 (P-46)[685], 27th January 1981; & JP-A-55 142 408</b></td><td>(74) Representative: <b>Lawson, David Glynne et al<br>MARKS & CLERK 57-60 Lincoln's Inn Fields<br>London WC2A 3LS(GB)</b></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to a magnetic head for recording and reproducing information on magnetic media.

As is well known, a magnetic head using an alloy core which is low in specific resistance is susceptible to an eddy current loss to lower the high frequency characteristic of the magnetic head.

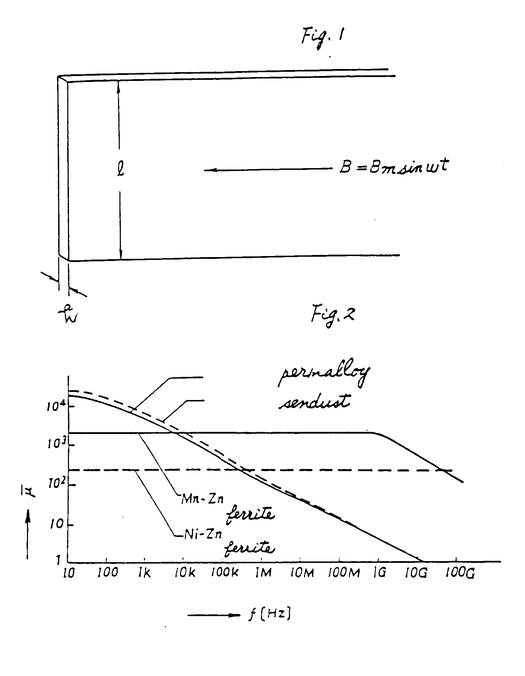

In the case of an alloy plate with the specific resistance $\rho$ as shown in Fig. 1, the eddy current loss We per unit volume is given by We = $\pi^2 h^2 f^2 Bm/6\rho$ ... (1), where h is the thickness of the alloy plate, f is the frequency of a recording signal, Bm is the maximum flux density. The equation (1) is explained by that the skin effect of a flux produced by an eddy current in high frequency causes magnetic permeability $\bar{u}$ to be substantially reduced. That is, under an audio frequency of about 10 kHz or more the magnetic permeability $\bar{u}$ of an alloy core is reduced less than that of a ferrite core as shown in Fig. 2.

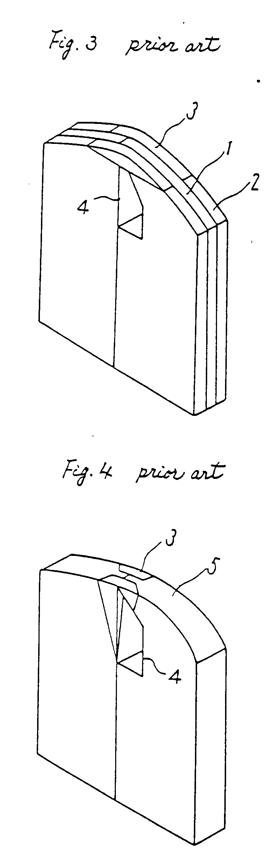

In order to solve the above described problem, a conventional magnetic head of an alloy core has been made of a core plate whose thickness, namely h in the equation (1), is made as thin as possible. To meet this requirement, an alloy magnetic head as shown in Fig. 3 has been developed. The conventional alloy magnetic head comprises a main core 1, two sub cores 2 sandwiching the main core 1 therebetween and two reinforcing glass plates 3 disposed on a magnetic tape abutting the face of the sub cores, in which main core 1 is made of alloy, while the sub cores 2 are made of ferrite. The main core 1 and the sub cores 2 are respectively provided with a winding groove 4. The alloy magnetic head thus constructed as shown in Fig. 3 is not free from such a problem however as its producing process is complicated and the number of processing steps tend to result in a low productivity. Namely, there have been a number of technical problems to be solved including to obtain appropriate flat level, bonding intensity and accuracy together with to avoid bending in assembling the main core 1 and sub cores 2. The productivity is further reduced because of the process in which micro chips of the main core 1 and sub cores 2 have to bonded to each other.

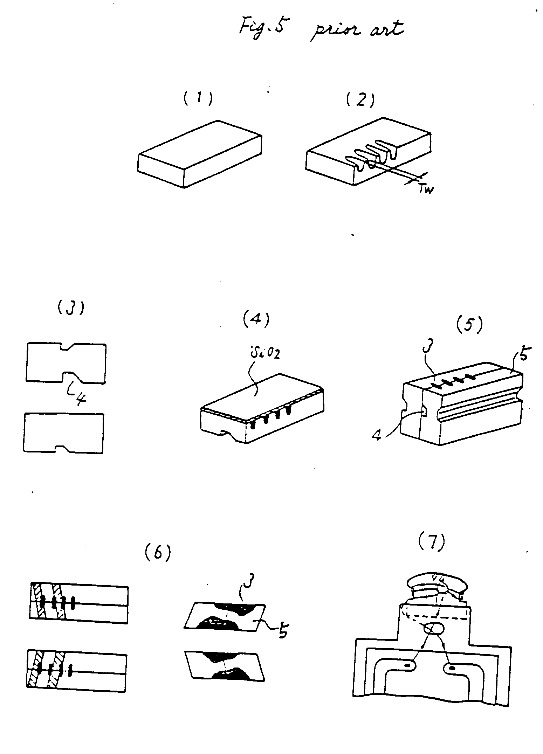

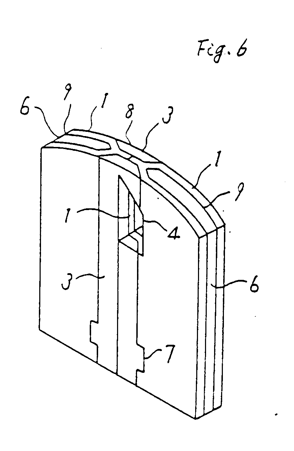

On the other hand, there is another conventional magnetic head of a ferrite core as shown in Fig. 4 which is improved in productivity. This conventional ferrite magnetic head comprises a main core 5 made of ferrite with a winding groove 4 and two reinforcing glass members 3. Reference is now made to Fig. 5 which shows the producing steps of the ferrite magnetic head mentioned above. In the step 1, a core block is cut out from a ferrite material. In the step 2, a plurality of head gap grooves each of which is equal to the track width Tw are formed in the core block and thereafter each reinforcing glass member 3 is deposited in the individual head gap groove. In the step 3, the winding groove 4 is formed in the core block and a head gap face of the core block is polished. In the step 4, a gap material of SiO₂ is sputtered on the head gap face. In the step 5, the two core blocks are secured together by glass depositing so that the two gap faces are confronting to each other. In the step 6, a composite body made up of the two core blocks is cut to provide plurality of head chips at the azimuth angle. Shadowed portions in the figure depict cutting off areas. In the step 7, the head chip is mounted on an electrode circuit board and its face to be confronting to magnetic recording media is polished and a coil is wound around the head chip. The ferrite magnetic head thus conducted as shown in Figs. 4 and 5 is still not free from the problem that its saturation flux density is low.

European Patent specification EP-A-0115842 discloses a magnetic head having the construction defined in the pre-characterising portion of claim 1 appended hereto.

### SUMMARY OF THE INVENTION

It is an object of this invention to provide a magnetic head capable of improving the high frequency characteristic and productivity.

It is a further object of this invention to provide a magnetic head capable of reducing the eddy current loss.

It is still a further object of this invention to provide a magnetic head without using sub cores.

It is still a further object of this invention to provide a magnetic head capable of increasing the mechanical strength.

According to the present invention, there is provided a magnetic head for recording and reproducing a signal on a magnetic tape, said magnetic head comprising:

a composite core made of an alloy material consisting of two component bodies each having a head gap edge at one end of thickness equal to the track width of the magnetic head and a pair of branch members extending away from the head gap edge, the pair of branch members having an overall width wider than the track width and defining a slit containing a non-magnetic material, wherein the two component bodies are secured to one another by glass depositing, with the head gaps of the respective component bodies facing one another to define a head gap of the magnetic head, and a second non-magnetic material is disposed on the confronting surfaces of the composite core; characterised in that an opening is provided in each one of the two component bodies for linking the non-magnetic material within the slits with the second non-magnetic material between the confronting surfaces of the composite core.

According to the present invention, there is further provided a method of producing a magnetic head for recording and playback, said method comprising:

cutting an alloy material to form a core block;

forming a plurality of head gap edges whose width is equal to the track width in one face of the core block;

depositing a reinforcing non-magnetic material between the head gap edges;

forming a winding opening in the core block;

polishing a head gap surface of the core block;

sputtering a gap material on the head gap surface;

combining the core block with another core block by glass deposition at their respective head gap confronting surfaces; and

cutting the combined core blocks to form a plurality of head chips, the method being characterised by:

forming an opening which communicates with the head gap edges in the core block;

depositing reinforcing non-magnetic material within the opening; and

forming a plurality of slits which communicate with the opening in a face of the core block which opposes said one face, and thereafter depositing a second reinforcing non-magnetic material within the slits, thereby establishing via the opening a direct bond between the second reinforcing non-magnetic material within the slits and the reinforcing non-magnetic material between the head gap edges.

## BRIEF DESCRIPTION OF THE DRAWINGS

Fig. 1 is a perspective view of a core material explaining eddy current losses.

Fig. 2 is a graph showing relation between the frequency and magnetic permeability of a core material.

Fig. 3 is a perspective view of a conventional magnetic head having an alloy core.

Fig. 4 is a perspective view of a conventional magnetic head having a ferrite core.

Fig. 5 is a processing view for producing the magnetic head shown in Fig. 4.

Fig. 6 is a perspective view of a magnetic head according to one embodiment of the invention.

Fig. 7 is a processing view for producing the magnetic head shown in Fig. 6.

Fig. 8 is a perspective view of a core block according to one embodiment produced in the process 2A shown in Fig. 7.

Figs. 9 and 10 are perspective views explaining a slit of the magnetic head shown in Fig. 6.

Fig. 11 is a perspective view of a core block according to another embodiment produced in the process 2A shown in Fig. 7.

Fig. 12 is a perspective view showing an inner structure of a magnetic head according to one embodiment of the invention.

## DESCRIPTION OF THE PREFERRED EMBODIMENTS

Fig. 6 is a perspective view of the magnetic head according to one embodiment of the invention. Referring to Fig. 6, the magnetic head comprises a composite core which has two core component bodies 1 and is reinforced with nonmagnetic material such as glass members 3 and 6. The core component bodies are made of alloy and has a slit 9 formed on each side thereof. The two core component bodies 1 are secured by glass depositing at their confronting surfaces shown in Fig. 6 and a head gap 8 is formed between them. A thickness of the head gap edge is equal to the track width of a magnetic tape. The reinforcing glass member 3 is disposed on both surfaces covering the joint of the two core component bodies 1. The reinforcing glass member 6 is disposed within the slit 9 of the individual core component body 1. A winding opening 4 is formed in one of the core component bodies 1 and the reinforcing glass members 3 and 6. A glass opening 7 is formed in each core component 1 and the reinforcing glass member 3 is deposited to join the reinforcing glass member 6 at the glass opening 7.

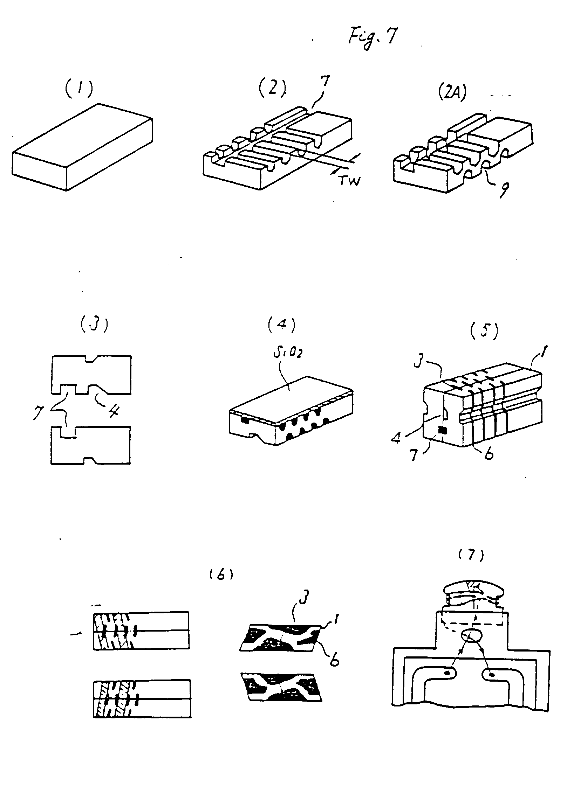

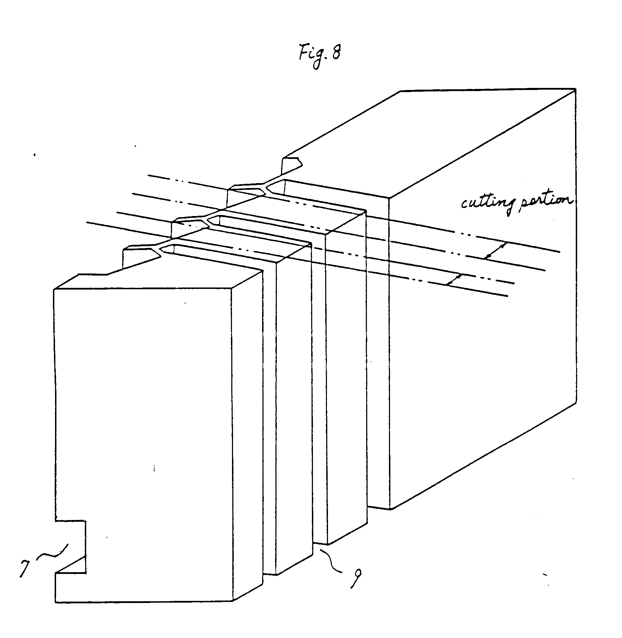

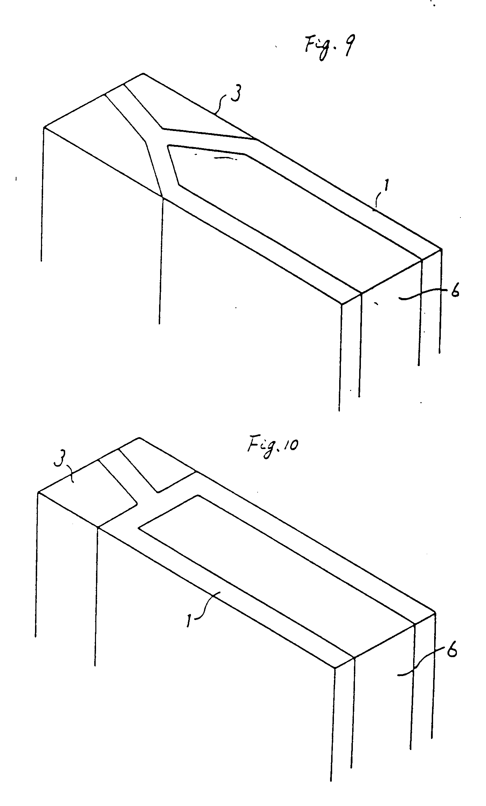

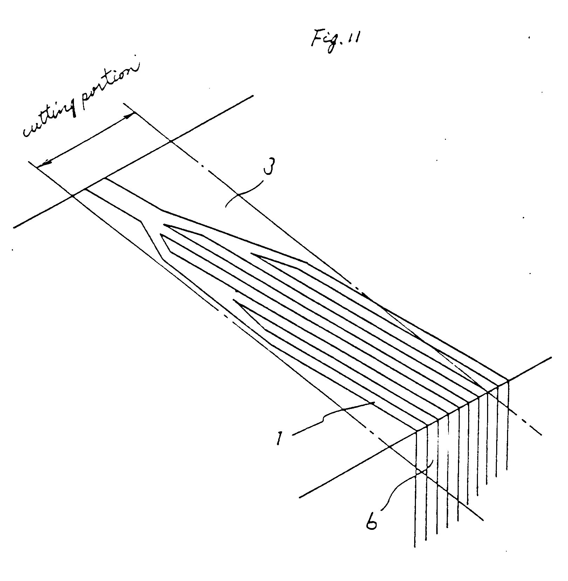

Fig. 7 shows steps for producing the magnetic head shown in Fig. 6. In the step 1, an alloy material is cut to form a core block. In the step 2, a plurality of the head gap edges whose each width is equal to the track width Tw and the glass opening 7 is formed in the core block, and thereafter the reinforcing glass member 3 is disposed between the head gap edges and within the glass opening 7. In the step 2A, a plurality of the slits 9 are formed in the core block and thereafter the reinforcing glass member 6 is disposed within the slits 9. Fig. 8 is a enlarged view of the core block having the slits 9. In the step 3, the winding opening 4 is formed in the core block and a head gap surface of the core block is polished. In the step 4, a gap material of $SiO_2$ is sputtered on the head gap surface. In the step 5, the two core blocks are secured together by glass depositing at the head gap confronting surfaces. In the step 6, a block material of the two core blocks is cut to form a plurality of head chips, namely the core shown in Fig. 6, at the azimuth angle. The shadowed portions depict the cutting off areas. In the step 7, the head chip is fixed to an electrode circuit board and its magnetic tape abutting face is polished and a coil is wound around the head chip.

By forming the slit in the core as described above, it is possible to utilize the conventional process for producing the ferrite core as shown in Figs. 4 and 5, and at the same time, the thinning of a core thickness is realized. Therefore, the sub core as shown in Fig. 3 is not required. In the equation (1), the eddy current loss is also reduced because of the thickness h of the core becoming thinner, which overcomes the effect of the alloy core being low in the specific resistance $\rho$.

Further, in order to record a signal on the magnetic tape in high density, an azimuth recording is adopted. Namely, a plane of the core and a direction of the track width of the head gap thereof make an azimuth angle. Accordingly, if the slit is formed parallel to the cutting off portion as shown in Fig. 8, the slit and the direction of the track width of the head gap make the azimuth angle, which results to minimize the thickness of the core. Furthermore, in order to minimize the thickness of the core at the bottom of the slit, a slit with a V-shaped bottom as shown in Fig. 9 is more advantageous than that of a flat-shaped bottom as shown in Fig. 10.

On the other hand, if productivity is thought to be more important than the high frequency characteristic, the slit can be formed at a right angle with respect to the direction of the track width of the head gap as shown in Fig. 11 and it is possible to decrease the producing price of the magnetic head. Further, Fig. 11 illustrates the core having a plurality of slits.

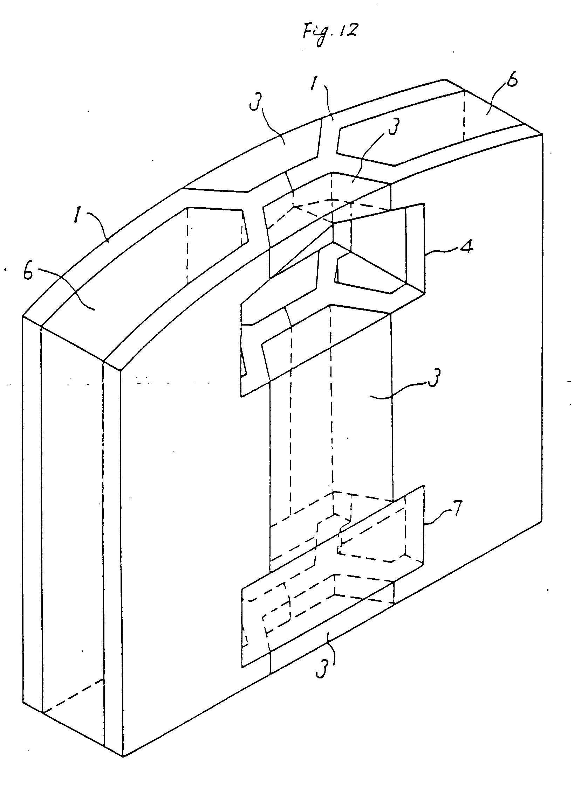

Furthermore, in order to obtain mechanical strength of the core having the slit and the head gap edge, the nonmagnetic material such as the reinforcing glass is disposed within the slit and around the head gap edge. Nevertheless, the bonding intensity between the core material and the nonmagnetic material is not usually sufficient because the thermal-expansion coefficient between them is different and the chemical affinity is lacking. To meet the requirement, the glass opening 7 is formed in the core as shown in Fig. 12 and a reinforcing glass member is disposed within the glass opening 7, namely the reinforcing glass 3 is deposited to the reinforcing glass member 6 at the glass opening 7. Though the reinforcing glass members 3 and 6 are divided into four portions with the two core component bodies 1, the four reinforcing glass members 3 and 6 are linked to one reinforcing glass member within the core by disposing the reinforcing glass member within the glass opening 7. Accordingly, it is possible to increase the mechanical strength of the core without depending on the chemical bonding intensity between the core material and the nonmagnetic material.

## Claims

1. A magnetic head for recording and reproducing a signal on a magnetic tape, said magnetic head comprising:

   a composite core made of an alloy material consisting of two component bodies (1) each having a head gap edge at one end of thickness equal to the track width ($T_w$) of the magnetic head and a pair of branch members extending away from the head gap edge, the pair of branch members having an overall width wider than said track width and defining a slit (9) containing a non-magnetic material (6), wherein the two component bodies (1) are secured to one another by glass depositing, with the head gaps of the respective component bodies (1) facing one another to define a head gap (8) of the magnetic head, and a second non-magnetic material (3) is disposed on the confronting surfaces of the composite core; characterised in that an opening (7) is provided in each one of the two component bodies (1) for linking the non-magnetic material (6) within the slits (9) with the second non-magnetic material (3) between the confronting surfaces of the composite core

2. A magnetic head as claimed in claim 1, wherein the first (6) and second (3) non-magnetic materials are glass.

3. A magnetic head as claimed in claim 1, wherein the slit (9) is formed through in the body (1) its tape abutting face to the bottom thereof.

4. A magnetic head as claimed in claim 3, wherein the slit (9) of the body (1) is formed at a fixed angle with respect to the direction of the track width ($T_w$) of the head gap edge.

5. A magnetic head as claimed in claim 4, wherein said fixed angle is an azimuth angle.

6. A magnetic head as claimed in claim 4, wherein said fixed angle is a right angle.

7. A magnetic head as claimed in claim 3, wherein the slit (9) of the body (1) has a V-shaped bottom.

**8.** A magnetic head as claimed in any preceding claim, wherein at least a portion of the sides of the slit (9) formed in the body (1) are substantially parallel with respect to one another.

**9.** A method of producing a magnetic head for recording and playback, said method comprising:
- cutting an alloy material to form a core block (1);
- forming a plurality of head gap edges whose width is equal to the track width ($T_w$) in one face of the core block (1);
- depositing a reinforcing non-magnetic material (3) between the head gap edges;
- forming a winding opening (4) in the core block (1);
- polishing a head gap surface of the core block (1);
- sputtering a gap material on the head gap surface;
- combining the core block (1) with another core block (1) by glass deposition at their respective head gap confronting surfaces; and
  cutting the combined core blocks to form a plurality of head chips, the method being characterised by:
- forming an opening (7) which communicates with the head gap edges in the core block (1);
- depositing reinforcing non-magnetic material (3) within the opening (7); and
- forming a plurality of slits (9) which communicate with the opening (7) in a face of the core block (1) which opposes said one face, and thereafter depositing a second reinforcing non-magnetic material (6) within the slits, thereby establishing via the opening (7) a direct bond between the second reinforcing non-magnetic material (6) within the slits and the reinforcing non-magnetic material (3) between the head gap edges.

**10.** A method according to claim 9, wherein the gap material is $SiO_2$.

**11.** A method according to claim 9 or claim 10, wherein the cutting of the combined core blocks is in a direction parallel to the slits (9) so that the slit of a cut of magnetic head makes an azimuth angle with the track width ($T_w$) of the head gap.

**12.** A method according to any one of claims 9 to 11 wherein the first and second non-magnetic materials are glass.

## Revendications

**1.** Tête magnétique pour l'enregistrement et la reproduction d'un signal sur une bande magnétique, ladite tête magnétique comprenant:
un noyau composé, fait en un matériau d'alliage composé de corps à deux composants (1), comportant chacun un bord d'entrefer à une extrémité, d'une épaisseur égale à la largeur de la piste ($T_w$) de la tête magnétique, et une paire d'éléments de branche s'étendant en s'écartant du bord de l'entrefer, la paire des éléments de branche ayant une largeur totale supérieure à ladite largeur de la piste et définissant une fente (9) contenant un matériau non magnétique (6), dans laquelle les corps à deux composants (1) sont fixés l'un à l'autre par dépôt de verre, les entrefers à composants respectifs (1) se faisant face pour définir un entrefer (8) de la tête magnétique, et dans laquelle un deuxième matériau non magnétique (3) est disposé sur les surfaces opposées du noyau composé; caractérisée en ce qu'un orifice (7) est pratiqué dans chacun des corps à deux composants (1) pour lier le matériau non magnétique (6) à l'intérieur des fentes (9) au deuxième matériau non magnétique (3) entre les surfaces opposées du noyau composé.

**2.** Tête magnétique selon la revendication 1, dans laquelle les premier (6) et deuxième (3) matériaux non magnétiques sont du verre.

**3.** Tête magnétique selon la revendication 1, dans laquelle la fente (9) est pratiquée dans le corps (1), de sa face en contact avec la bande jusqu'à sa partie de fond.

**4.** Tête magnétique selon la revendication 3, dans laquelle la fente (9) du corps (1)) est formée à un angle fixe par rapport à la direction de la largeur de la piste ($T_w$) du bord de l'entrefer.

**5.** Tête magnétique selon la revendication 4, dans laquelle ledit angle fixe est un angle d'azimut.

**6.** Tête magnétique selon la revendication 4, dans laquelle le dit angle fixe est un angle droit.

7. Tête magnétique selon la revendication 3, dans laquelle la fente (9) du corps (1) a un fond en forme de V.

8. Tête magnétique selon l'une quelconque des revendications précédentes, dans laquelle au moins une partie des côtés de la fente (9) pratiquée dans le corps (1) sont pratiquement parallèles les uns aux autres.

9. Procédé de production d'une tête magnétique pour l'enregistrement et la reproduction, ledit procédé comprenant les étapes suivantes:
   - découpage d'un matériau d'alliage pour former un bloc de noyau (1);
   - formation de plusieurs bords d'entrefer de largeur égale à la largeur de la piste ($T_w$) dans une face du bloc de noyau (1);
   - dépôt d'un matériau de renforcement non magnétique (3) entre les bords de l'entrefer;
   - formation d'un orifice d'enroulement (4) dans le bloc de noyau (1);
   - polissage d'une surface de l'entrefer du bloc de noyau (1);
   - métallisation sous vide d'un matériau d'entrefer sur la surface de l'entrefer;
   - combinaison du bloc de noyau (1) avec un autre bloc de noyau (1) par dépôt de verre sur leurs surfaces opposées respectives de l'entrefer; et
   - découpage des blocs de noyau combinés pour former plusieurs copeaux de tête, le procédé étant caractérisé par les étapes suivantes:
   - formation d'un orifice (7) communiquant avec les bords de l'entrefer dans le bloc de noyau (1);
   - dépôt du matériau de renforcement non magnétique (3) dans l'orifice (7); et
   - formation de plusieurs fentes (9) communiquant avec l'orifice (7) dans une face du bloc de noyau (1), opposant ladite une face, suivie par le dépôt d'un deuxième matériau de renforcement non magnétique (6) dans les fentes, établissant ainsi par l'intermédiaire de l'orifice (7) une liaison directe entre le deuxième matériau de renforcement non magnétique (6) à l'intérieur des fentes et le matériau de renforcement non magnétique (3) entre les bords de l'entrefer.

10. Procédé selon la revendication 9, dans lequel le matériau de l'entrefer et du $SiO_2$.

11. Procédé selon les revendications 9 ou 10, dans lequel le découpage des blocs de noyau combinés se fait dans une direction parallèle aux fentes (9), de sorte que la fente d'une coupe de tête magnétique forme un angle d'azimut avec la largeur de la piste ($T_w$) de l'entrefer.

12. Procédé selon l'une quelconque des revendications 9 à 11, dans lequel les premier et deuxième matériaux non magnétiques sont du verre.

**Patentansprüche**

1. Magnetkopf für das Aufzeichnen und die Wiedergabe eines Signals auf bzw. von einem Magnetband, wobei der Magnetkopf folgendes aufweist:
   einen zusammengesetzten Kern aus einem Legierungsmaterial, bestehend aus zwei Komponentenkörpern (1), die jeweils eine Kopfspaltkante an einem Ende mit einer Dicke, die gleich der Spurbreite (Tw) des Magnetkopfes ist, und ein Paar von Verzweigungsteilen aufweist, die sich von der Kopfspaltkante weg erstrecken, wobei das Paar von Verzweigungsteilen eine Gesamtbreite hat, die breiter ist als die Spurbreite und einen Schlitz (9) bildet, der ein nichtmagnetisches Material (6) enthält, wobei die zwei Komponentenkörper (1) aneinander mit einem Glasauftrag befestigt sind, wobei die Kopfspalte der jeweiligen Komponentenkörper (1) einander gegenüberliegen und einen Kopfspalt (8) des Magnetkopfes bilden, und wobei ein zweites nichtmagnetisches Material (3) auf den gegenüberstehenden Oberflächen des Zusammengesetzten Kernes angeordnet ist,
   dadurch gekennzeichnet,
   daß eine Öffnung (7) in jedem der zwei Komponentenkörper (1) vorgesehen ist, um das nicht-magnetische Material (6) in den Schlitzen (9) mit dem zweiten nicht-magnetischen Material (3) zwischen den gegenüberstehenden Oberflächen des Zusammengesetzten Kernes zu verbinden.

2. Magnetkopf nach Anspruch 1,
   wobei die ersten (6) und zweiten (3) nicht-magnetischen Materialien Glas sind.

3. Magnetkopf nach Anspruch 1,
   wobei der Schlitz (9) in dem Körper (1) von seiner Bandanlagefläche bis zu seinem Boden durchgehend ausgebildet ist.

**4.** Magnetkopf nach Anspruch 3,
wobei der Schlitz (9) des Körpers (1) unter einem festen Winkel in bezug auf die Richtung der Spurbreite (Tw) der Kopfspaltkante ausgebildet ist.

**5.** Magnetkopf nach Anspruch 4,
wobei der feste Winkel ein Azimutwinkel ist.

**6.** Magnetkopf nach Anspruch 4,
wobei der feste Winkel ein rechter Winkel ist.

**7.** Magnetkopf nach Anspruch 3,
wobei der Schlitz (9) des Körpers (1) einen V-förmigen Boden hat.

**8.** Magnetkopf nach einem der vorherigen Ansprüche,
wobei die Seiten des in dem Körper (1) ausgebildeten Schlitzes (9) zumindest teilweise im wesentlichen parallel zueinander ausgebildet sind.

**9.** Verfahren zur Herstellung eines Magnetkopfes für das Aufzeichnen und die Wiedergabe, wobei das Verfahren folgendes umfaßt:
- Schneiden eines Legierungsmaterials, um einen Kernblock (1) zu bilden;
- Ausbilden einer Vielzahl von Kopfspaltkanten, deren Breite gleich der Sprubreite (Tw) in der einen Fläche des Kernblockes (1) ist;
- Auftragen eines verstärkenden nicht-magnetischen Materials (3) zwischen den Kopfspaltkanten;
- Ausbilden einer windungsöffnung (4) in dem Kernblock (1);
- Polieren einer Kopfspaltoberfläche des Kernblockes (1);
- Aufstäuben eines Spaltmaterials auf die Kopfspaltoberfläche;
- Kombinieren des Kernblockes (1) mit einem anderen Kernblock (1) durch Auftragen von Glas auf ihren jeweiligen dem Kopfspalt gegenüberliegenden Oberflächen; und
- Schneiden der kombinierten Kernblöcke zur Bildung einer Vielzahl von Kopfchips, wobei das Verfahren gekennzeichnet ist durch folgende Schritte:
- Bilden einer Öffnung (7), die mit den Kopfspaltkanten in dem Kernblock (1) in Verbindung steht;
- Abscheiden von verstärkendem nicht-magnetischem Material (3) innerhalb der Öffnung (7);

- Ausbildung einer Vielzahl von Schlitzen (9), die mit der Öffnung (7) in einer Fläche des Kernblockes (1) in Verbindung stehen, welche der einen Fläche gegenüberliegt, und anschließendes Auftragen eines zweiten verstärkenden nicht-magnetischen Materials (6) innerhalb der Schlitze, um dadurch über die Öffnung (7) eine direkte Verbindung zwischen dem zweiten verstärkenden nicht-magnetischen Material (6) innerhalb der Schlitze und dem verstärkenden nicht-magnetischen Material (3) zwischen den Kopfspaltkanten herzustellen.

**10.** Verfahren nach Anspruch 9,
wobei das Spaltmaterial $SiO_2$ ist.

**11.** Verfahren nach Anspruch 9 oder 10,
wobei das Schneiden der kombinierten Kernblöcke in einer Richtung parallel zu den Schlitzen (9) durchgeführt wird, so daß der Schlitz von einem Schnitt des Magnetkopfes einen Azimutwinkel mit der Spurbreite (Tw) des Kopfspaltes bildet.

**12.** Verfahren nach einem der Ansprüche 9 bis 11,
wobei die ersten und zweiten nicht-magnetischen Materialien Glas sind.

Fig. 1

$B = Bm \sin wt$

Fig. 2

permalloy
sendust

$10^4$

$10^3$

$\overline{\mu}$

$10^2$

Mn-Zn ferrite

10

Ni-Zn ferrite

1

10  100  1k  10k  100k  1M  10M  100M  1G  10G  100G

$f$ [Hz]

Fig. 3   prior art

Fig. 4   prior art

Fig.5  prior art

( 1 )

( 2 )

Tw

( 3 )

$L_4$

( 4 )

$SiO_2$

( 5 )

3

5

4

( 6 )

3

5

( 7 )

Fig. 6

Fig. 7

Fig. 8

cutting portion

7

9

Fig. 9

Fig. 10

Fig. 11

cutting portion

3

1

6

Fig. 12